# NEUE EUROPÄISCHE PATENTSCHRIFT

(11) **EP 1 047 730 B2**
(45) Veröffentlichungstag und Bekanntmachung des Hinweises auf die Entscheidung über den Einspruch: **19.10.2005**
(45) Hinweis auf die Patenterteilung: 24.10.2001
(21) Anmeldenummer: 98965866.1
(22) Anmeldetag: 18.12.1998
(51) Int. Cl.: C08L 101/00, E04F 15/16, C09J 9/00

(54) **POLYMERZUSAMMENSETZUNG ZUR VERWENDUNG ALS WÄSSRIGER FUSSBODENKLEBSTOFF**
POLYMER COMPOSITION FOR USE AS AQUEOUS FLOOR ADHESIVE
COMPOSITION POLYMERE A UTILISER COMME ADHESIF AQUEUX POUR REVETEMENTS DE SOL

(30) Priorität: 20.01.1998 DE 19801892
(43) Veröffentlichungstag der Anmeldung: 02.11.2000
(73) Patentinhaber: BASF Aktiengesellschaft, 67056 Ludwigshafen (DE)
(72) Erfinder: FICKEISEN, Peter, D-67246 Dirmstein (DE); MEISTER, Martin, D-67434 Neustadt (DE); RECK, Bernd, D-67269 Grünstadt (DE); URBAN, Dieter, D-67346 Speyer (DE); WISTUBA, Eckehardt, D-67098 Bad Dürkheim (DE); KOCH, Thomas, D-67165 Waldsee (DE); LANGHAUSER, Georg, D-67152 Ruppertsberg (DE)
(86) Internationale Anmeldenummer: PCT/EP1998/008418
(87) Internationale Veröffentlichungsnummer: WO 1999/037716

(56) Entgegenhaltungen:
- EP-A- 0 792 926
- DE-A- 4 404 411
- PATENT ABSTRACTS OF JAPAN vol. 095, no. 010, 30. November 1995 & JP 07 173798 A (MITSUI TOATSU CHEM INC), 11. Juli 1995
- DATABASE WPI Section Ch, Week 8850 Derwent Publications Ltd., London, GB; Class A12, AN 88-358682 XP002096071 & JP 63 270872 A (JAPAN SYNTHETIC RUBBER CO LTD), 8. November 1988

## Beschreibung

Die vorliegende Erfindung betrifft eine wäßrige Zusammensetzung, enthaltend ein Gemisch aus

| | |
|---|---|
| 10 bis 50 Gew.-% | eines Polymeren A) mit einem Gelgehalt kleiner 20 Gew.-% und einem zahlenmittleren Molgewicht Mₙ der löslichen Antelle kleiner 30,000 und welches 60 bis 100 Gew.-%, bezogen auf das Polymer, C₁ bis C₂₀-Alkyl(meth)acrylate und deren Mischungen enthält und |
| 50 bis 90 Gew.-% | eines Füllstoffs B), wobei die Gewichtsangaben auf die Gewichtssumme des Polymeren A) und des Füllstoffs B) bezogen sind. |

Desweiteren betrifft die Erfindung die Verwendung dieser wäßrigen Zusammensetzung als Klebstoff für Fußbodenbeläge.

Generell sollen Klebstoffe eine gute Adhäsion, d.h. eine gute Haftung zum Substrat und eine gute Kohäsion, d.h. einen guten Zusammenhalt in der Klebstoffschicht, aufweisen. An Klebstoffe für Fußbodenbeläge werden besondere Anforderungen gestellt. Hier ist vor allem ein gutes Naßanzugsvermögen gewünscht. Ein gutes Naßanzugsvermögen bedeutet, daß nach Verlegen z.B. eines Teppichbodens auf den mit der wäßrigen Dispersion beschichteten Untergrund der Teppichboden zunächst noch ausgerichtet und die Lage korrigiert werden kann, dann aber bald eine rutschfeste Verklebung gegeben ist, deren Festigkeit mit fortlaufender Trocknung zunimmt

Ein gutes Trockenanzugsvermögen bedeutet, daß auch nach längerer Ablüftzeit ein Teppichboden nach Verlegen auf den dann trockenen Untergrund einen festen, rutschfesten Verbund ergibt.

Darüberhinaus ist ein Verzicht auf flüchtige organische Bestandteile, z.B. Lösemittel oder Weichmacher erwünscht, um spätere Belastungen durch entsprechende Emissionen zu vermeiden.

Gewünscht ist auch ein geringer Bindemittelgehalt. Bei Zusatz von Tackifiern soll das Eigenschaftsniveau insbesondere die Kohäsion möglichst gut bleiben.

Fußbodenkleber sind bereits aus EP-A-490191 und WO 95/21884 bekannt.

EP-A-0 792 928 beschrelbt wässrige Zusammensetzungen enthaltend ein Gemisch von Polymer - Bindemittel und Füllstoff. Die Bindemittel weisen einen höheren Gehalt an Gel auf.

Aufgabe gegenüber diesern Stand der Technik war, Fußbodenkleber mit verbesserten anwendungstechnischen Eigenschalten, insbesondere einem guten Naßanzugsvermögen zur Verfügung zu stellen. Aufgabe war auch, den Bindemittelanteil in den Fußbodenklebstoffen aus Kostengründen möglichst gering zu halten. Soweit ein Zusatz von Tackifiern (klebrigmachenden Harzen) gewünscht ist, soll dies ohne Beeinträchtigung von z.B. Naß- und Trockenanzugsvermögen möglich sein.

Demgemäß wurde die oben beschriebene wäßrige Zusammansetzung und ihre Verwendung als Fußbodenklebstoff gefunden.

Die wäßrigen Zusammensetzung enthält vorzugsweise

| | |
|---|---|
| 10 bis 45 Gew.-%, | besonders bevorzugt 15 bis 40 Gew.-% des eingangs definierten Polymeren A) und |
| 55 bis 90 Gew.-%, | besonders bevorzugt 60 Gew.-% bis 85 Gew.-% eines Füllstoffs B). |

Die Gewichtsprozente beziehen sich dabei auf die Gewichtssumme aus A) und B).

Bei dem Polymeren A) handelt es sich um ein radikallsch polymerisiertes Polymer aus ethylenisch ungesättigten Monomeren.

Die vorstehend genannten Monomeren bzw. Mischungen dieses Monomeren sind zu 80 bis 100 Gew. -%, vorzugsweise 80 bis 100 Gew.-%, besonders bevorzugt 90 bis 99,8 Gew. -%, bezogen auf das Polymer, im Polymer enthalten.

Im einzeinen zu nennen sind z.B. (Meth)acrylsäurealkylester mit einem C₁-C₁₀-Alkylrest, wie Methylmethacrylat, Methylacylat, n-Butylacrylat, Ethylacrylat und 2-Ethylhexylacrylat.

Insbesondere sind auch Mischungen der (Meth)acrylsäurealkylester geeignet.

Besonders bevorzugt sind (Meth)acrylsäureester und deren Mischungen.

Weitere Monomere, die z.B. von 0 bis 40 Gew.-%, vorzugsweise von 0 bis 20 Gew.-% und besonders bevorzugt von 0,2 bis 10 Gew.-% im Polymer enthalten sein können, sind insbesondere C₁-C₁₀-Hydroxyalkyl(meth)acrylate, (Meth)acrylamid sowie dessen am Stickstoff mit C₁-C₄-Alkyl substituierten Derivate, ethylenisch ungesättigte Carbonsäuren, Dicarbonsäuren, deren Halbester und Anhydride, z.B. (Meth)acrylsäure, Maleinsäure, Fumarsäure, Maleinsäureanhydrid, Maleinsäure- und Fumarsäurehalbester und Itaconsäure. Ganz besonders bevorzugt ist ein Gehalt von 0,2 bis 5 Gew.-% einer ethylenisch ungesättigten Carbonsäure.

Die Glasübergangstemperatur des Polymeren liegt vorzugsweise zwischen -50 und +20°C, insbesondere zwischen -35°C und +20°C, besonders bevorzugt zwischen -30°C und -0°C und ganz besonders bevorzugt zwischen -28°C und -5°C.

Die Glasübergangstemperatur des Polymeren läßt sich nach üblichen Methoden wie Differentialthermoanalyse oder Differential Scanning Calorimetrie (s. z.B. ASTM 3418/82, sog. "midpoint temperature") bestimmen.

Der Gelgehalt des Polymeren A) liegt unter 20 Gew.-% bezogen auf das Polymer A). Der Gelgehalt sollte vorzugsweise über 5 Gew.-% liegen.

Der Gelgehalt ist der Gehalt an unlöslichen Bestandtellen.

Der Gelgehalt wird durch die nachfolgende Methode bestimmt und definiert: Die Dispersion wird bei 21°C zu einem Film der Dicke von ca. 1 mm getrocknet. Ein Gramm des Polymerfilms wird in 100 ml Tetrahydrofuran gegeben und eine Woche bei 21°C stehen gelassen. Danach wird die erhaltene Lösung bzw. Mischung mit Hilfe eines Gewebefilters (Maschenweite 125 µm) filtriert. Der Rückstand (gequollener Film) wird bei 21°C 2 Tage im Vakuumtrockenschrank getrocknet und anschließend gewogen. Der Gelgehalt ist die Masse des gewogenen Rückstands dividiert durch die Masse des eingesetzten Polymerfilms.

Die in Tetrahydrofuran löslichen Anteile des Polymeren betragen entsprechend 60 bis 100 Gew.-%, vorzugsweise 70 bis 100 Gew.-%, besonders bevorzugt 80 bis 100 Gew.-% insbesondere bis 95 Gew.-%, bezogen auf das Polymer.

Das zahlenmittlere Molekulargewicht Mₙ dieser löslichen Anteile ist vorzugsweise kleiner als 20.000, bevorzugt kleiner als 15.000 und das gewichtsmittlere Molekulargewicht M_{w} ist vorzugsweise größer 250.000 (bestimmt durch Gelpermeationschromatographie mit Polystyrol als Standard an einer Polymerlösung in Tetrahydrofuran nach Sedimetation der unlöslichen Bestandteile).

Mₙ liegt im allgemeinen jedoch nicht unter 5000 g/mol und M_{w} liegt im allgemeinen nicht über 800.000 g/mol.

Die Herstellung des Polymeren erfolgt durch radikalische Polymerisation. Geeignete Polymerisationsmethoden, wie Substanz-, Lösungs-, Suspensione- oder Emulsionspolymerisation sind dem Fachmann bekannt.

Vorzugsweise wird das Copolymerisat durch Lösungspolymerisation mit anschließender Dispergierung In Wasser oder besonders bevorzugt durch Emulsionspolymerisation hergestellt, so daß wäßrige Copolymerdispersionen entstehen.

Die Emulsionspolymerisation kann diskontinuierlich, mit oder ohne Verwendung vonSaatlatices, unter Vorlage aller oder einzeiner Bestandteile des Reaktionsgemisches, oder bevorzugt unter teilweiser Vorlage und Nachdesierung der oder einzeiner Bestandteile des Reaktionsgemisches, oder nach dem Dosierverfahren ohne Vorlage durchgeführt werden.

Die Monomeren können bei der Emulsionspolymerisation wie üblich in Gegenwart eines wasserlöslichen Initiators und eines Emulgators bei vorzugsweise 30 bis 95°C polymerisiert werden.

Geeignete Initiatoren sind z.B. Natrium-, Kalium- und Ammoniumpersulfat, tert.-Butylhydroperoxide, wasserlösliche Azoverbindungen oder auch Redoxinitiatoren wie H₂O₂/Ascorbinsäure.

Als Emulgatoren dienen z.B. Alkalisalze von längerkettigen Fettsäuren, Alkylsulfate, Alkylsulfonate, alkylierte Arylsulfonate oder alkylierte Biphenylethersulfonate. Des weiteren kommen als Emulgatoren Umsetzungsprodukte von Alkylenoxiden, insbesondere Ethylen- oder Propylenoxid mit Fettalkoholen, -säuren oder Phenol, bzw. Alkylphenolen in Betracht.

Im Falle von wäßrigen Sekundärdispersionen wird das Copolymerisat zunächst durch Lösungspolymerisation in einem organischen Lösungsmittel hergestellt und anschließend unter Zugabe von Salzbildnern, z.B. von Ammoniak zu Carbonsäuregruppen enthaltenden Copolymerisaten. In Wasser ohne Verwendung eines Emulgators oder Dispergierhilfsmittels dispergiert. Das organische Lösungsmittel kann abdestilliert werden. Die Herstellung von wäßrigen Sekundärdispersionen ist dem Fachmann bekannt und z.B. in der DE-A-37 20 860 beschrieben.

Zur Einstellung des Molekulargewichts können bei der Polymerisation Regler eingesetzt werden. Geeignet sind z.B. -SH enthaltende Verbindungen wie Mercaptoethanol, Mercaptopropanol. Thiophenol, Thioglycerin, Thioglykolsäureethylester, Thioglykolsäuremethylester und tert.-Dodecylmercaptan.

Der Feststoffgehalt der erhaltenen Polymerdispersionen beträgt vorzugsweise 40 bis 80, besonders bevorzugt 45 bis 75 Gew.-%. Hohe Polymerfeststoffgehalte können z.B. nach Verfahren, welche in der deutschen Patentanmeldung P 4 307 683.1 oder der EP 37 923 beschrieben sind, eingestellt werden.

Die wäßrige Zusammensetzung enthält neben dem Polymeren noch mindestens den Füllstoff B). Als solche in Betracht kommen z.B. feingemahlene oder gefällte Kreiden mit einem mittleren Teilchendurchmesser von im allgemeinen zwischen 2 und 50 µm und/oder Quarzmehl mit einem üblichen mittleren Teilchendurchmesser von 3 bis 50 µm.

Die Zusammensetzung kann weiterhin Netz- oder Dispergiermittel z.B. für die Füllstoffe, Verdicker und auch z.B. noch weitere übliche Zuschlagstoffe, wie Entschäumer und Konservierungsstoffe enthalten.

Netz- oder Dispergiermittel können z.B. in Mengen von 0 bis 5 Gew.-%, Verdicker in Mengen von 0 bis 10 Gew.-%, Konservierungsmittel in Mengen von 0 bis 1 Gew.-% und Entschäumer in Mengen von 0 bis 5 Gew.-% in der wäßrigen Zusammensetzung enthalten sein. Die Gewichtsangaben beziehen sich dabei auf die Summe aller Bestandteile der wäßrigen Zusammensetzung, mit Ausnahme von Wasser.

Die Zusammensetzung ist vorzugsweise im wesentlichen frei, vorzugsweise frei von organischen Lösungsmitteln und Weichmachern wie z.B. Butylacetat, Toluol oder Phthalsäureester. Sie enthält daher organische Verbindungen mit einem Siedepunkt unterhalb 300°C bei Normaldruck (1 bar) in Mengen unter vorzugsweise 0,5 Gew.-% besonders bevorzugt unter 0,1 Gew.-%, ganz besonders bevorzugt unter 0,05 Gew.% und insbesondere unter 0,01 Gew.-%. Besonders bevorzugt erfüllt die erfindungsgemäße Zusammensetzung bzw. der erfindungsgemäße Fußbodenklebstoff Anforderungen der Emissionsfreiheit, wie sie von der Gemeinschaft Emissionskontrollierter Verlegewerkstoffe definiert werden.

Die Emissionen werden mit einer Kammerprüfmethode bestimmt. Der Fußbodenklebstoff bzw. die erfindungsgemäße Zusammensetzung wird mit 300 g/m² auf eine Glasplatte aufgetragen, deren Größe sich nach dem Kammervolumen richtet. Die Beladung der Kammer beträgt 0,4 m² der beschichteten Glasplatte pro m³ Kammervolumen. Die Emissionsbedingungen in der Edelstahlprüfkammer (Volumen mindestens 125 Liter) sind 23°C, 50 % rel. Luftfeuchte und ein stündlicher Luftwechsel der einen Austausch der gesamten Luft alle 2 Stunden bewirkt. Nach 10 Tagen werden die Langzeitemissionen bestimmt. Dazu wird ein definiertes Volumen des Luftstroms über Adsorbentien geleitet. Nach Desorption werden die emittierten Stoffe gaschromatographisch (GC-MS-Kopplung) oder flüssigkeitschromatographisch bestimmt. Die Langzeitemissionen werden in µg/m³ bestimmt, wobei Toluol als Standardsubstanz eingesetzt wird. Emittierte Substanzen, deren Kammerkonzentration größer als 20 µg/m³ ist, werden identifiziert und mit der identifizierten Reinsubstanz und kalibriert. Emittierte Substanzen, deren Kammerkonzentration kleiner als 20 µg/m³ ist, werden nicht einzeln identifiziert. Die Kalibrierung erfolgt in diesen Fällen mit Toluol.

Die Werte aller Substanzen werden addiert.

Im Falle der erfindungsgemäßen Zusammensetzung beträgt der Emissionswert für die Summe aller organischen Verbindungen maximal vorzugsweise 1500 µg/m³, und insbesondere maximal 500 µg/m³.

Die Zusammensetzung kann klebrigmachende Harze (Tackifier), wie Kolophoniumharze oder modifizierte Kolophoniumharze z.B. auf Basis von hydrierter Abietinsäure oder Abietinsäureestern enthalten.

Der Gehalt an Tackifiern kann vorzugsweise 1 bis 40 Gew.-Teile, bezogen auf 100 Gew.-Teile der Summe aus Polymer A) und Füllstoff B) betragen.

Die Herstellung der wäßrigen Zusammensetzung kann in einfacher Weise dadurch erfolgen, daß der bei der Emulsionspolymerisation erhaltenen wäßrigen Polymerdispersion die Füllstoffe und gegebenenfalls weitere Additive unter Rühren zugesetzt werden.

Der Wassergehalt der fertigen Zubereitung liegt im allgemeinen bei 7 bis 50, insbesondere 10 bis 30 Gew.-%, bezogen auf die gesamte wäßrige Zubereitung.

Die wäßrige Zusammensetzung eignet sich insbesondere als Klebstoff zum Verkleben von Substraten aus Kunststoff, Holz, Metall, Textilien aus gewebten und oder ungewebten Fasern.

Ganz besonders eignet sich die wäßrige Zubereitung als Fußbodenkleber für Teppichböden oder sonstige Bodenbeläge z.B. aus PVC (in Ausführungen als Mehrschichtbeläge oder Homogenbeläge), Schaumstoffbeläge mit Textilunterseite (z.B. Jute), Polyestervlies, Gummibeläge, Textilbeläge, z.B. auch mit unterschiedlicher Rückenausstattung (wie Polyurethanschaum, Styrol-Butadien-Schaum, textiler Zweitrücken), Nadelfilzbodenbeläge, Polyolefinbeläge oder Linoleumbeläge, auf Untergründen wie Holz, Estrich, Beton, keramische Fliesen, Metalluntergründe oder ähnliches.

Der Kleber kann z.B. mit einer Zahnleiste auf den Untergrund aufgetragen werden. Nach dem üblichen Ablüften wird der Bodenbelag eingelegt. Arbeitstechnisch ist der erfindungsgemäße Kleber den lösungsmittelhaltigen Kunstharzklebem und den klassischen Dispersionseinseitklebern gleichzusetzen. In der Verarbeitbarkeit ähnelt der neue Kleber lösungsmittelhaltigen Klebern. Die erfindungsgemäße Klebstoffzusammensetzung weist ein gutes Niveau von anwendungstechnischen Eigenschaften wie Schälfestigkeit, Scherfestigkeit, Naßanzugsvermögen und Trockenanfaßvermögen auf. Die erfindungsmäßige Zusammensetzung erreicht dieses gute Eigenschaftsniveau mit deutlich geringerem Gehalt an Bindemittel, d.h. an Polymer A). Auch nach Zusatz von Tackifiern, z.B. zur Erhöhung der Klebrigkeit bleibt die Naßanzugsfestigkeit auf hohem Niveau.

Die in den folgenden Beispielen angegebenen Teile und Prozente beziehen sich, wenn nichts anderes angegeben, auf das Gewicht.

### Beispiele

### I. Dispersionen

Nachstehend sind zum Vergleich einige Verkaufsprodukte aufgeführt, die für Fußbodenklebstoffe empfohlen werden. Die Dispersion Acronal DS entspricht im Monomeraufbau Acronal 378 und hat daher die gleiche Glasübergangstemperatur Tg. Der Gehalt an Regler wurde variiert, um das gewünschte Molgewicht zu erhalten.

**Tabelle 1:**

| Physikalische Daten der Dispersionen | | | | | | |
|---|---|---|---|---|---|---|
| Dispersion | FG | Mn | Mw | Mw/Mn | Gelgehalt Gew.-% | Tg/°C |
| Acronal A200 zum Vergleich | 70 % | 26 000 | 416 00 | 16 | 54 % | -47 |
| Acronal A323 zum Vergleich | 55 % | 5 800 | 753 000 | 130 | 70 % | -22 |
| Acronal 378 zum Vergleich | 62 % | 22 000 | 437 000 | 20 | 68 % | -22 |
| Acronal DS | 62 % | 11 900 | 354 000 | 30 | 15 % | -22 |

| | | | | | | |
|---|---|---|---|---|---|---|
| FG: Festgehalt | | | | | | |
| Tg: Glasübergangstemperatur | | | | | | |

### II. Fußbodenklebstoffe

Die Dispersionen wurden mit Füllstoff und mit weiteren Additiven gemischt.

In Tabelle 2 sind die Mischungskomponenten und ihre Gewichtsteile aufgeführt.

**Tabelle 2**

| Versuch | 1 | 2 | 3 | 4 |
|---|---|---|---|---|
| Acronal A 200 | 24,4 | | | |
| Acronal A 323 | | 31,0 | | |
| Acronal DS 378 | | | 27,5 | |
| Acronal DS | | | | 27,5 |
| 2 %ige Latekoll D Lösung ¹⁾ | 14,6 | 8,0 | 11,5 | 11,5 |
| Agitan 281²⁾ | 0,2 | 0,2 | 0,2 | 0,2 |
| Lutensol AO 109³⁾ | 0,5 | 0,5 | 0,5 | 0,5 |
| Lumiten N-OG⁴⁾ | 0,5 | 0,5 | 0,5 | 0,5 |
| Pigmentverteiler NL⁵⁾ | 0,5 | 0,5 | 0,5 | 0,5 |
| Calgon N 30 %ig⁶⁾ | 1,0 | 1,0 | 1,0 | 1,0 |
| Na-Gluconat⁷⁾ | 1,5 | 1,5 | 1,5 | 1,5 |
| Burez LE 3004⁸⁾ | 11,0 | 11,0 | 11,0 | 11,0 |
| Ulmer Weiss XM⁹⁾ | 45,8 | 45,8 | 45,8 | 45,8 |

| | | | | |
|---|---|---|---|---|
| ¹⁾ : Verdicker | | | | |
| ²⁾ : Entschäumer | | | | |
| ³⁾ : Emulgierhilfsmittel | | | | |
| ⁴⁾ : Emulgierhilfsmittel | | | | |
| ⁵⁾ : Dispergierhilfsmittel für Pigment | | | | |
| ⁶⁾ : Dispergierhilfsmittel für Pigment | | | | |
| ⁷⁾ : - | | | | |
| ⁸⁾ : Tackifier (Harz auf Basis des Triethylenglycolesters der Abietinsäure) | | | | |
| ⁹⁾ : Füllstoff | | | | |

Die Menge der Polymerdispersion wurde so bestimmt, daß sich jeweils 17 Gew. -Teile Polymer (fest) ergaben.

Die Menge an Verdicker (Latekoll) wurde so bestimmt, daß die Viskosität gleich war.

### III. Anwendungstechnische Prüfung

### - Naßanzugsvermögen (NAV):

Der Klebstoff wird mit einem DIN-Rakel auf eine Zementfaserplatte (z.B. Eternit® 2000) (20 x 50 cm) in Abzugsrichtung aufgetragen. Auftragsmenge ca. 350 - 400 g/m². Nadelfilzbeläge (NBB Streifen) werden nach 10 Minuten Ablüften in das Kleberbett eingelegt und mit einer 2,5 kg Walze durch 3 mal Hin- und Herrollen angepreßt. In den angegebenen Zeitabständen werden die Beläge mit einem Abzugsgerät abgezogen und dabei die Zunahme des Abschälwiderstandes in N 5 cm bestimmt.

Ergebnisse sind in Tabelle 3 aufgeführt.

Schälfestigkeit: Bestimmt nach DIN 53269

**Tabelle 3**

| | Schälwerte N/mm | | NAV N/5 cm | | | |
|---|---|---|---|---|---|---|
| | 10 min | 30 min | 10 min | 15 min | 20 min | 30 min |
| 1 (zum Vergleich) | 0,34 | 0,24 | 4 | 7 | 9 | 8 |
| 2 (zum Vergleich) | 0,91 | 0,07 | 2 | 5 | 11 | 22 |
| 3 (zum Vergleich) | 1,38 | 0,18 | 4 | 10 | 19 | 34 |
| 4 | 1,22 | 0,24 | 12 | 26 | 44 | 49 |

## Patentansprüche

1. Wäßrige Zusammensetzung, enthaltend ein Gemisch aus
| | |
|---|---|
| 10 bis 50 Gew.-% | eines Polymeren A) mit einem Gelgehalt kleiner 20 Gew.-%, einem zahlenmittleren Molgewicht Mₙ der löslichen Anteile kleiner 30.000 und welches 60 bis 100 Gew.-%, bezogen auf das Polymer, C₁ bis C₂₀Alkyl(meth)acrylate und deren Mischungen enthält und |
| 50 bis 90 Gew.-% | eines Füllstoffs B), wobei die Gewichtsangaben auf die Gewichtssumme des Polymeren A) und des Füllstoffs B) bezogen sind. |

2. Wäßrige Zusammensetzung gemäß Anspruch 1, wobei der Gewichtsanteil des Polymeren 10 bis 45 Gew.-% und des Füllstoffs 55 bis 90 Gew.-% beträgt.

3. Wäßrige Zusammensetzung gemäß Anspruch 1 oder 2, wobei das Polymere in Form einer 40 bis 75 %igen wäßrigen Dispersion vorliegt.

4. Wäßrige Zusammensetzung gemäß einem der Ansprüche 1 bis 3, wobei der Gehalt an flüchtigen organischen Bestandteilen, d.h. organischen Verbindungen mit einem Siedepunkt bei 1 bar unter 300°C kleiner als 0,5 Gew.-%, bezogen auf die wäßrige Zusammensetzung, ist.

5. Wäßrige Zusammensetzung gemäß einem der Ansprüche 1 bis 4, wobei die Glasübergangstemperatur des Polymeren A) -50°C bis +20°C beträgt.

6. Verwendung von wäßrigen Zusammensetzungen gemäß einem der Ansprüche 1 bis 5 als Klebstoff.

7. Verwendung von wäßrigen Zusammensetzungen gemäß einem der Ansprüche 1 bis 5 als Fußbodenkleber.

8. Mit einer wäßrigen Zusammensetzung gemäß einem der Ansprüche 1 bis 5 beschichtete Substrate.

## Claims

1. An aqueous composition comprising a mixture of
| | |
|---|---|
| from 10 to 50% | by weight of a polymer A) having a gel content of less than 20% by weight and a number-average molecular weight Mₙ of the soluble fractions of less than 30,000 and containing from 60 to 100% by weight, based on the polymer, of C₁- to C₂₀-alkyl (meth)acrylates and mixtures thereof, and |
| from 50 to 90% | by weight of a filler B), the amounts by weight being based on the weight sum of the polymer A) and of the filler B). |

2. An aqueous composition as claimed in claim 1, where the proportion by weight of the polymer is from 10 to 45% by weight and that of the filler is from 55 to 90% by weight.

3. An aqueous composition as claimed in claim 1 or 2, where the polymer is present in the form of an aqueous dispersion with a concentration of from 40 to 75%.

4. An aqueous composition as claimed in any of claims 1 to 3, where the content of volatile organic constituents - that is, organic compounds having a boiling point at 1 bar of less than 300°C - is less than 0.5% by weight, based on the aqueous composition.

5. An aqueous composition as claimed in any of claims 1 to 4, where the glass transition temperature of the polymer A) is from -50°C to +20°C.

6. The use of an aqueous composition as claimed in any of claims 1 to 5 as an adhesive.

7. The use of an aqueous composition as claimed in any of claims 1 to 5 as a flooring adhesive.

8. A substrate coated with an aqueous composition as claimed in any of claims 1 to 5.

## Revendications

1. Composition aqueuse, contenant un mélange de 10 à 50 % en poids d'un polymère A ayant une teneur en gel inférieure à 20 % en poids, une masse moléculaire moyenne en nombre Mₙ des fractions solubles inférieure à 30 000, et qui, par rapport au polymère, contient de 60 à 100 % en poids de (méth)acrylate d'alkyle en C₁ à C₂₀, et leurs mélanges, et de 50 à 90 % en poids d'une charge B, les indications de poids étant rapportées au poids total du polymère A et de la charge B.

2. Composition aqueuse selon la revendication 1, dans laquelle la proportion pondérale du polymère est de 10 à 45 % en poids et celle de la charge est de 55 à 90 % en poids.

3. Composition aqueuse selon la revendication 1 ou 2, dans laquelle le polymère se présente sous forme d'une dispersion aqueuse à 40 à 75 %.

4. Composition aqueuse selon l'une des revendications 1 à 3, dans laquelle la teneur en constituants organiques volatils, c'est-à-dire des composés organiques ayant un point d'ébullition sous 1 bar inférieur à 300°C, est inférieure à 0,5 % en poids par rapport à la composition aqueuse.

5. Composition aqueuse selon l'une des revendications 1 à 3, dans laquelle la température de transition vitreuse du polymère A est de -50 à +20°C.

6. Utilisation de compositions aqueuses selon l'une des revendications 1 à 5 en tant qu'adhésif.

7. Utilisation de compositions aqueuses selon l'une des revendications 1 à 5 en tant qu'adhésif pour revêtement de sol.

8. Substrats revêtus d'une composition aqueuse selon l'une des revendications 1 à 5.
